# FASCICULE DE BREVET EUROPEEN

(11) **EP 2 327 833 B1**
(45) Date de publication et mention de la délivrance du brevet: **22.08.2012**
(21) Numéro de dépôt: 10191812.6
(22) Date de dépôt: 19.11.2010
(51) Int. Cl.: F16L 1/032, F16L 57/00, H02G 1/06, H02G 9/02

(54) **Dispositif pour protéger au moins un objet de forme générale allongée tel qu'un câble ou une conduite**
Vorrichtung zum Schutz eines länglichen Teils wie eines Kabels oder ein Rohrs
Device for protecting an elongated object such as a cable or a pipe

(30) Priorité: 20.11.2009 FR 0958222
(43) Date de publication de la demande: 01.06.2011
(73) Titulaire: Dalaine, Jean-Charles, 56190 Ambon (FR); Dalaine, Audrey, 56190 Noyal-Muzillac (FR)
(72) Inventeur: Dalaine, Jean-Charles, 56190 Ambon (FR); Dalaine, Audrey, 56190 Noyal-Muzillac (FR)
(74) Mandataire: Pontet, Bernard

(56) Documents cités:
- US-A- 2 353 727
- US-A- 2 388 018

## Description

L'invention concerne le domaine de la protection des câbles ou conduites ou canalisation enterrés. La présente invention s'applique généralement à la protection de tout objet de forme générale allongée et enterré. Par commodité, ces objets seront regroupés sous le vocable générique « conduite », sachant qu'il recouvre également d'autres objets allongés tels que des câbles.

On connaît via le document FR 2 874 246 A1 un dispositif et un procédé de protection d'une conduite dans lequel une enveloppe constituée d'une bande, en l'espèce réalisée dans un matériau géotextile, est disposée autour de la conduite à l'aide d'un conformateur, faisant passer l'enveloppe de l'état de bande enroulée sur un touret, à une gaine entourant la conduite, à mesure que le conformateur se déplace le long de la conduite. On note que plusieurs conduites peuvent être disposées dans une même enveloppe. Dans ce document, la fixation de l'enveloppe est assurée soit par recouvrement et soudage des bords latéraux de l'enveloppe, soit à l'aide d'un équipement dénommé « spiraleuse » qui entoure la gaine de géotextile avec un ou plusieurs rubans sur toute la longueur nécessaire, soit à l'aide d'un ou plusieurs fils tendus en hélice autour de la gaine. Dans ces deux derniers cas, la spiraleuse doit se déplacer en même temps que le conformateur le long de la conduite ou l'inverse.

On connaît des spiraleuses constituées d'un cadre fermé, renfermant une roue disposée dans un plan vertical, et guidée en rotation autour de son axe central. La roue comporte un passage central permettant d'introduire la conduite dans la spiraleuse, de traverser la roue en son centre, et de ressortir par une face de la spiraleuse opposée à la face d'introduction, ce qui permet un déplacement longitudinal de la spiraleuse le long de la conduite. La roue comporte un certain nombre de bobines de fil de maintien, par exemple entre une et huit bobines montées à rotation sur la roue, l'axe de rotation des bobines étant sensiblement parallèle à l'axe central de rotation de la roue. Le fil de chaque bobine est arrimé à une zone donnée de l'enveloppe. La rotation de la roue autour de son axe, dans un mouvement combiné à la progression longitudinale de la spiraleuse le long de la conduite engendre un recouvrement de l'enveloppe par le fil ayant la forme d'une hélice, ou de plusieurs hélices parallèles enchevêtrées, correspondant respectivement à chaque fil et chaque bobine associée.
Dans un tel dispositif, communément utilisé, la conduite introduite dans l'appareil sur des centaines de mètres se trouve prisonnière de l'équipement de spiralage.
Ceci nécessite que le chantier ait été soigneusement préparé et que les longueurs de conduites introduites dans la machine aient été correctement calculées en amont.
Cependant les entreprises ont de moins en moins de temps pour préparer les chantiers, voire même les projets évoluent au cours du chantier. Dans certains cas, on peut être amené soit à ressortir une des deux extrémités de la conduite introduite dans la spiraleuse, soit à couper la conduite (perte de temps, attente d'autorisation, coût d'intervention etc.).
Enfin, mais surtout, il peut être intéressant d'enfouir une partie du réseau directement dans le sol, sans protection sur une longueur donnée, le sol étant de structure non agressive pour la conduite à un endroit.
Mais très souvent, sur l'itinéraire d'un chantier de plusieurs kilomètres, voire dizaines de kilomètres, on peut décider de protéger la conduite, sur une zone et pas sur une autre, d'où l'intérêt de pouvoir dégager la conduite de la machine sans la couper, ou la ressortir par une extrémité sur parfois plusieurs centaines de mètres linéaires.

On connaît également via le document US 2,388,018 une spiraleuse comportant un cadre portant une roue, disposée dans un plan vertical et guidée en rotation autour de son axe central. La roue comporte un passage radial permettant, lorsque ce passage est disposé face à une ouverture du châssis, d'introduire un câble transversalement dans la spiraleuse. Deux guides, disposés de chaque côté de la roue, assurent le guidage du câble dans la spiraleuse. Chaque guide est constitué de deux parties semi-circulaires amovibles sur un support châssis.

L'invention a pour but d'éliminer les difficultés précédentes en proposant un dispositif qui évite de ressortir une conduite introduite dans l'appareil. Ce dispositif permet une utilisation souple et adaptable aux nombreuses contraintes rencontrées sur les chantiers. Un tel dispositif selon l'invention a pour but de réaliser des économies substantielles, en temps et en argent, tout en rattrapant une préparation parfois approximative du chantier.

A cet effet, l'invention a pour objet un dispositif pour protéger au moins un objet de forme générale allongée tel qu'un câble ou une conduite, ledit objet étant placé dans une enveloppe, notamment constituée d'une bande de géotextile, mise en forme de gaine autour dudit objet, le dispositif étant destiné à entourer l'enveloppe d'au moins un fil de maintien, tendu en hélice sur sa surface extérieure et s'étendant dans la direction longitudinale de l'objet, le dispositif comprenant :
- un châssis,
- un conduit traversant le châssis entre une face avant et une face arrière, et définissant un passage pour l'objet allongé, de manière à pouvoir être traversé par ledit objet allongé,
- au moins une roue montée à rotation sur le châssis autour d'un axe central longitudinal, la roue étant guidée via son bord périphérique par des moyens de roulement portés par le châssis, et étant fixée solidairement sur la périphérie du conduit,
- au moins une bobine de fil montée à rotation sur la roue, autour d'un axe de rotation sensiblement parallèle à l'axe central longitudinal du disque et excentré par rapport à ce dernier,
- des moyens d'entraînement motorisés provoquant la rotation de la roue et du conduit autour de l'axe central longitudinal,
caractérisé en ce que le châssis, le conduit et ladite au moins une roue sont chacun constitués d'au moins deux parties mobiles l'une par rapport à l'autre, de manière à présenter un passage transversal à l'axe central longitudinal, entre les faces avant et arrière, permettant d'extraire transversalement l'objet allongé du dispositif.

Ainsi la conduite n'est pas emprisonnée dans le dispositif, de sorte qu'elle peut être désolidarisée en un minimum de temps et de manipulation, quelle que soit la position longitudinale du dispositif. Le dispositif peut ainsi être déplacé sans devoir suivre étroitement la conduite, sur un tronçon donné où son passage n'est pas possible ou alors dans le cas où la mise en place d'une enveloppe et du fil de maintien n'est pas nécessaire.

Selon d'autres caractéristiques avantageuses de l'invention, le châssis est constitué d'un demi-châssis supérieur s'emboîtant sur un demi-châssis inférieur.

Selon encore d'autres caractéristiques avantageuses de l'invention, le conduit est constitué de deux demi-cylindres coopérant en contact l'un avec l'autre par deux paires de génératrices diamétralement opposées.

Selon encore d'autres caractéristiques avantageuses de l'invention, ladite au moins une roue est constituée de deux demi-disques, respectivement solidaires des deux demi-cylindres, chaque demi-disque étant délimité sensiblement dans le plan défini par les génératrices d'extrémité de leur demi-cylindre correspondant.

Selon encore d'autres caractéristiques avantageuses de l'invention, les demi-cylindres comportent des moyens de fixation tels que des cornières ou des pattes disposées au voisinage de leurs génératrices d'extrémité, et assemblées deux à deux par des systèmes vis-écrou, ces moyens de fixation s'étendant ou étant répartis sur au moins une partie de la longueur du conduit.

Selon encore d'autres caractéristiques avantageuses de l'invention, les demi-disques sont assemblés l'un à l'autre par des bords ayant des formes complémentaires, telles que des marches disposées tête-bêche, ou un système mâle-femelle.

Selon encore d'autres caractéristiques avantageuses de l'invention une première roue située sensiblement à mi-longueur du conduit, cette roue supportant ladite au moins une bobine dont l'axe s'étend vers l'arrière, et une seconde roue sensiblement parallèle à la première et située à l'arrière de celle-ci.

Selon encore d'autres caractéristiques avantageuses de l'invention les moyens de roulement comprennent, pour chaque roue, au moins deux galets inférieurs supportant la roue, montés à rotation sur le demi-châssis inférieur, et deux galets supérieurs, de guidage, montés à rotation sur le demi-châssis supérieur.

Selon encore d'autres caractéristiques avantageuses de l'invention les galets supérieurs sont montés sur le demi-châssis supérieur via des moyens de réglage de la position de leur axe de rotation.

Selon encore d'autres caractéristiques avantageuses de l'invention les moyens d'entraînement motorisés comprennent un moteur pourvu d'un arbre moteur, des moyens récepteurs solidaires du corps formé par le conduit et ladite au moins une roue, des moyens de transmission de mouvement depuis l'arbre moteur vers les moyens récepteurs.

Selon encore d'autres caractéristiques avantageuses de l'invention, les moyens récepteurs sont constitués d'une couronne dentée, par exemple fixée sur ladite au moins une roue, tandis que les moyens de transmission sont constitués d'une chaine ouvrable.

Selon encore d'autres caractéristiques avantageuses de l'invention, les moyens récepteurs sont constitués d'une poulie, par exemple fixée sur ladite au moins une roue, tandis que les moyens de transmission sont constitués d'une courroie à maillons ouvrable.

Selon encore d'autres caractéristiques avantageuses de l'invention, ladite au moins une roue comprend des moyens de fixation permettant d'accueillir entre une et huit bobines, réparties angulairement autour de l'axe longitudinal.

Selon encore d'autres caractéristiques avantageuses de l'invention, à chaque bobine est associée au moins une patte de guidage du fil, disposée sensiblement à une extrémité avant du conduit, chaque patte étant constituée d'une équerre ayant la forme générale d'un L, dont la branche courte est appliquée sur la surface extérieure du conduit, et est maintenue solidaire de celui-ci via une vis introduite par l'intérieur du conduit, dans deux orifices respectivement du conduit et de la branche courte, l'extrémité libre de la vis recevant un écrou tel qu'un écrou de type papillon ou analogue, chaque branche longue du L comportant à son extrémité libre un orifice de passage du fil destiné à le guider.

Selon encore d'autres caractéristiques avantageuses de l'invention, chaque patte comprend une branche annexe, prolongeant la branche courte du L du côté opposé à la branche longue, la branche annexe supportant un doigt tenseur du fil venant de la bobine et traversant l'orifice de passage de la branche longue, le fil entourant le doigt tenseur d'au moins un tour et étant renvoyé vers l'objet allongé, dans une zone où l'enveloppe doit être maintenue par ce fil.

L'invention sera mieux comprise à la lecture de la description qui va suivre d'un mode de réalisation non limitatif de l'invention et à la lumière des dessins annexés sur lesquels :
- la figure 1 représente une vue générale schématique d'un dispositif de conformation d'une enveloppe en forme de gaine autour d'une conduite, dans lequel est prévu, à l'arrière, dans la partie droite de la figure, un dispositif de protection selon l'invention,
- la figure 2 représente une vue agrandie du dispositif de protection de la figure 1,
- la figure 3 représente une vue partielle du dispositif de la figure 2, dans laquelle le demi-châssis supérieur a été retiré,
- la figure 4 représente le demi-châssis inférieur du dispositif de protection de la figure 2,
- la figure 5 représente un détail du dispositif de la figure 2, dans une zone de jonction entre le demi-châssis supérieur et le demi-châssis inférieur,
- les figures 6 et 7 représentent les demi-cylindres et demi-disques du dispositif de la figure 2, dans des configurations respectivement séparée et assemblée,
- la figure 8 représente un détail du dispositif de la figure 8, illustrant une partie avant du conduit et le disque avant, illustrant une patte de guidage et un doigt tenseur du fil,
- la figure 9 illustre un détail de réalisation de la partie avant du conduit selon l'invention, sur laquelle sont montés la patte et le doigt tenseur de la figure 8,
- les figures 10 à 12 représentent plusieurs agencements possibles des moyens d'entraînement motorisés de la roue du dispositif de protection de la figure 2,
- la figure 13 représente une section transversale du conduit selon l'invention,
- la figure 14 à 17 représentent deux variantes possibles d'assemblage des demi-disques selon l'invention, en vue transversale et de face,
- la figure 18 représente un galet de guidage des roues selon l'invention.

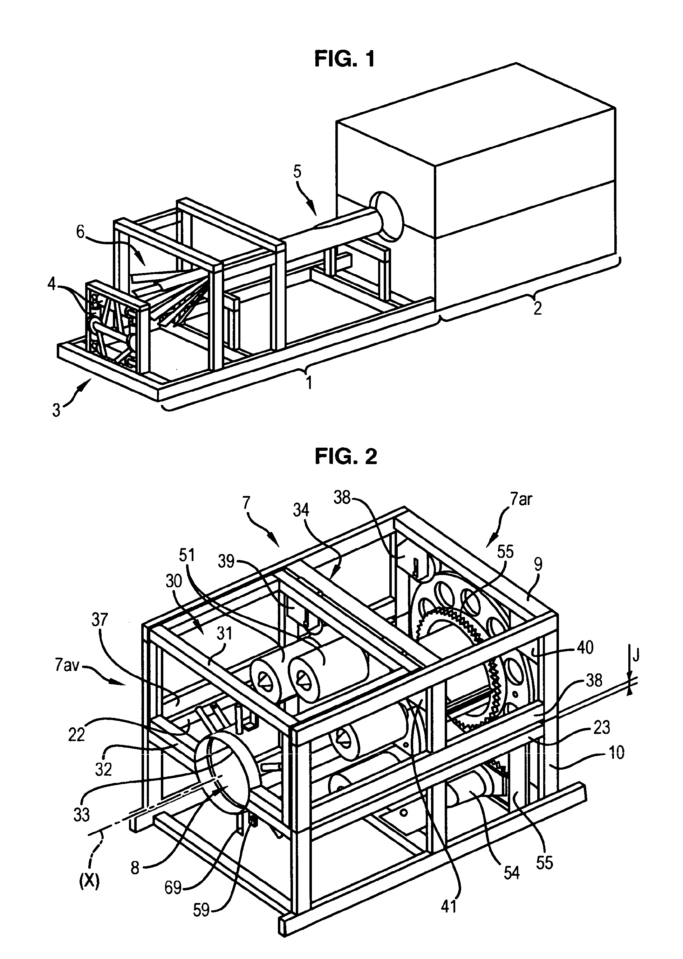

On a représenté à la figure 1 une vue générale d'un dispositif de conformation 1 d'une enveloppe en forme de gaine autour d'une conduite, comprenant dans sa partie arrière un dispositif de protection 2 selon l'invention. Les notions « avant » et « arrière » s'entendent par rapport au sens de déplacement de l'équipement le long de la tranchée, la conduite étant introduite par l'avant du dispositif, au fur et à mesure de sa progression. Précisons également que le terme « longitudinal » se rapporte à la direction de déplacement du dispositif et donc au déplacement relatif du dispositif par rapport à la conduite ayant pénétré dans celui-ci. De façon connue, la conduite (non représentée) est issue d'un touret comportant une réserve de conduite, qui va être déroulée au fur et à mesure de la progression du dispositif de conformation le long de la tranchée. La conduite est introduite par une voie d'arrivée 3 dans le dispositif de conformation, guidé par un jeu de rouleaux rotatifs 4. Cette conduite est ensuite introduite dans un conformateur 5, en même temps qu'une enveloppe (non représentée) est déroulée depuis un touret correspondant comprenant une réserve d'enveloppe. Les tourets ne sont pas représentés sur la figure 1. La conduite se présente à l'entrée du conformateur au dessus de l'enveloppe. L'entrée du conformateur comporte une bouche 6 de guidage ayant une forme évasée, semblable à un demi-cône d'entonnoir. Au fur et à mesure de l'introduction conjointe de la conduite et de l'enveloppe dans le conformateur, les bords latéraux de l'enveloppe sont rabattus l'un sur l'autre, de manière à former une gaine de protection. Cette opération est réalisée par un système de parois et/ou de galets forçant l'enveloppe à prendre progressivement la forme d'une gaine au fur, à mesure de son introduction dans le conformateur 5. Une description plus complète de ces moyens de conformation connus est présentée dans le document FR 874 246 A.

En amont du conformateur, la conduite enveloppée ressort pour s'introduire dans un dispositif de protection 2 selon l'invention, représenté schématiquement à la figure 1, destiné à parfaire le maintien de l'enveloppe autour de la conduite.

En référence à la figure 2, le dispositif de protection 2 comprend un châssis 7 ayant la forme générale d'un parallélépipède, comportant une face avant 7av pourvue d'une ouverture 8 au travers de laquelle la conduite est introduite, et une face arrière 7ar au travers de laquelle elle est extraite, avant d'être déposée par exemple au fond de la tranchée. Le châssis est réalisé en tubes mécano soudés à section rectangulaire ou carrée.

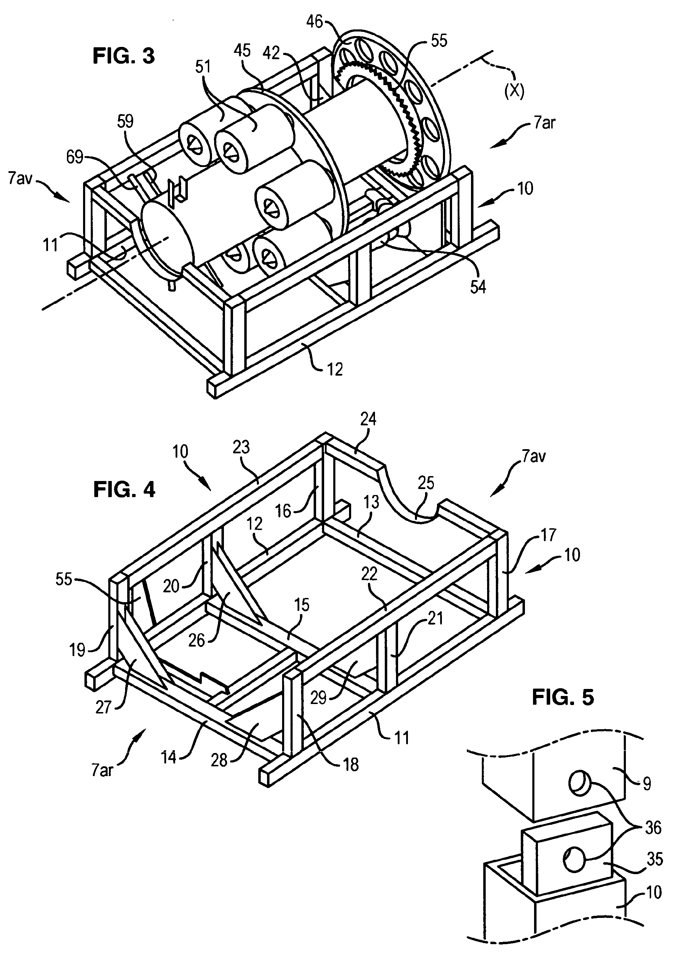

Selon l'invention, le châssis comprend un demi-châssis supérieur 9 surplombant un demi-châssis inférieur 10. Le plan de joint est sensiblement situé à mi-hauteur du châssis. Comme cela est visible aux figures 2 et 4, le demi-châssis inférieur 10 comprend à sa base un cadre rectangulaire pourvu de côtés longitudinaux 11, 12, reliés sensiblement à leurs extrémités par des côtés transversaux 13, 14. Ce cadre comprend également une traverse 15 parallèle aux côtés transversaux 13, 14 et de même longueur que ces derniers. Cette traverse 15 relie les côtés longitudinaux 11, 12 dans une zone sensiblement médiane de leur longueur, ou comme dans l'exemple représenté, légèrement écartée de celle-ci, par exemple à environ 60% de la longueur des côtés longitudinaux 11, 12, par rapport à la face avant 7av du cadre.
Le demi-châssis inférieur 10 comprend également, dans l'exemple représenté, six montants verticaux s'élevant depuis le cadre, dont quatre montants 16-19 surplombent les quatre coins du cadre et deux montants 20, 21 surplombent les points de jonctions de la traverse 15 avec les côtés longitudinaux 11, 12. En partie haute du demi-châssis inférieur les extrémités supérieures des montants verticaux sont reliées sur chaque côté longitudinaux par deux profilés 22, 23 parallèles situés respectivement au dessus des côtés longitudinaux 11, 12. Les montants 16, 17 de la face avant 7av sont également reliés à leur extrémité supérieure par une traverse 24 comportant en son centre une échancrure 25 de forme semi-circulaire délimitant la partie basse de l'ouverture 8. On note également que le demi-châssis inférieur 10 comporte quatre supports 26-29 pour des moyens de roulement tels que des galets, qui seront décrits ci-après. Deux supports 26, 29 sont disposés dans les zones de jonction de la traverse 15 avec les montants verticaux 20, 21 en vis-à-vis. Deux autres supports 27, 28 sont disposés dans les zones de jonction du côté transversal 14 de la face arrière 7ar, avec les côtés longitudinaux 11, 12. Dans l'exemple illustré à la figure 4, chaque support est constitué de deux plaques parallèles allongées disposées sensiblement à 45° entre les montants verticaux et le côté transversal ou la traverse centrale, constituant de ce fait des jambes de force prenant solidement appui sur les profilés du châssis. Ces plaques sont destinées à maintenir l'axe de rotation de chaque galet comme décrit ci-après. Ces galets étant situés en partie basse du châssis, ils supportent le poids de roues logées dans le châssis qui seront décrites ci-après et justifient de ce fait d'être dimensionnées et fixées de façon robuste.

En référence à la figure 2, le demi-châssis supérieur 9 est réalisé de façon sensiblement analogue et symétrique au demi-châssis inférieur 10, à l'exception du cadre de base, qui ne comporte pas dans l'exemple illustré de côté transversal sur la face avant 7av, mais comporte en revanche une fenêtre 30 d'ouverture, mobile par rapport au châssis, ayant la forme une équerre empiétant tant sur la face supérieure du châssis 7 que sur la face avant 7av. Cette fenêtre 30 est constituée de deux cadres de profilés mécano-soudés, disposés à 90°, et partageant un même côté 31 disposé symétriquement au côté transversal 13 de la face avant du demi-châssis inférieur 10. On note également que la fenêtre 30 comporte un profilé transversal 32 disposé sur la face avant 7av, disposé de façon sensiblement symétrique à la traverse 24 du demi-châssis inférieur 10, et ayant également en son centre une échancrure 33 de forme semi-circulaire délimitant la partie haute de l'ouverture 8. Notons que les notions de symétrie évoquées ici sont relatives au plan de joint entre deux demi-châssis. La fenêtre 30 est articulée sur une traverse 34 du demi-châssis supérieur 9, située à l'aplomb de la traverse centrale 15 du demi-châssis inférieur 10. Cette fenêtre permet d'accéder facilement à l'espace intérieur du châssis, notamment afin de manipuler les bobines de fil sans démonter l'ensemble.

En référence à la figure 5, les montants verticaux situés aux quatre angles du demi-châssis supérieur 9 coopèrent via un système d'emboitement male-femelle avec les montants verticaux respectifs situés au quatre angles du demi-châssis inférieur 10. Dans l'exemple illustré, le demi-châssis inférieur 10 comporte par exemple des pattes 35 pénétrant dans l'espace intérieur des profilés du demi-châssis supérieur 9, jusqu'à ce que les demi-châssis coopèrent en butée l'un avec l'autre par contact des bords d'extrémités des profilés. Un système de verrouillage de type vis écrou est prévu, la vis traversant l'un des profilés 9 ainsi que la patte de fixation 35, verrouillant ainsi la fixation des demi-châssis.

Une fois assemblés, les demi-châssis 9, 10 coopèrent en appui l'un sur l'autre uniquement via les extrémités de leurs montants verticaux situés aux quatre angles. Les profilés longitudinaux 22, 23, 37, 38 adjacents des demi-châssis, qui se font face, définissent entre eux un jeu J d'au moins 5 mm (figure 2).

Le demi-châssis supérieur 9 comporte également des supports 39-41 surplombant les supports de galets du demi-châssis inférieur 10. Ces supports sont constitués de couples de platines parallèles, permettant de maintenir les axes galets qui, étant disposés au dessus des roues comme cela sera décrit ultérieurement, ont une fonction de guidage en rotation des roues. Ces supports comportent également des moyens de réglage de la position verticale des axes de galet permettant de régler le jeu entre les galets et les roues.

Les demi-châssis comportent également des plaques ou grilles (non représentées par souci de simplicité), portés par les profilés et isolant l'espace intérieur, aux fins de le protéger d'éventuelles agressions, mais également aux fins de protéger des utilisateurs s'approchant du dispositif.

La figure 3 illustre le dispositif de protection selon l'invention, sans le demi-châssis supérieur 9.

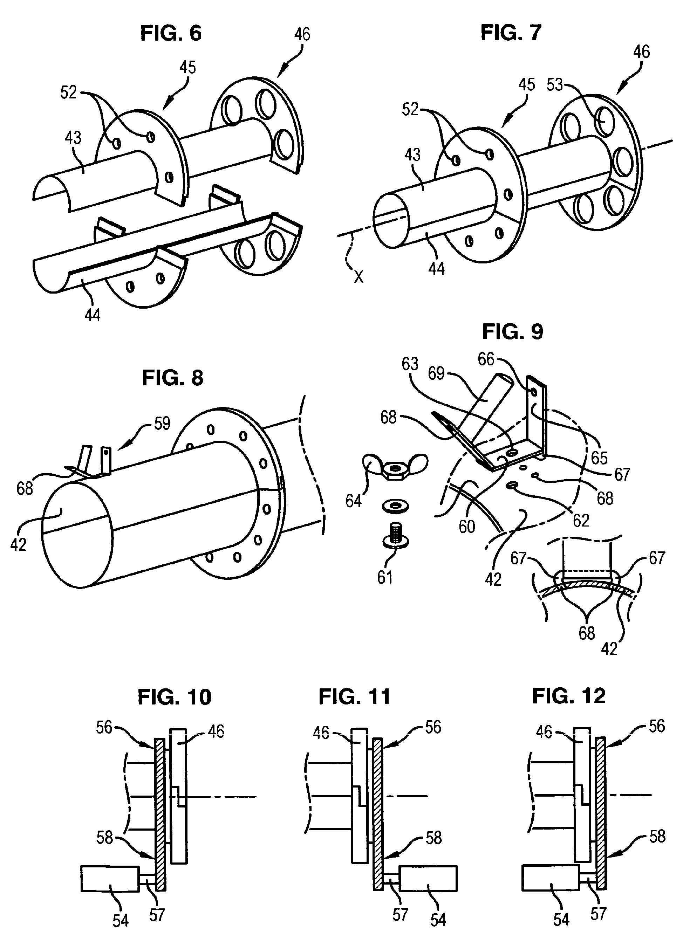

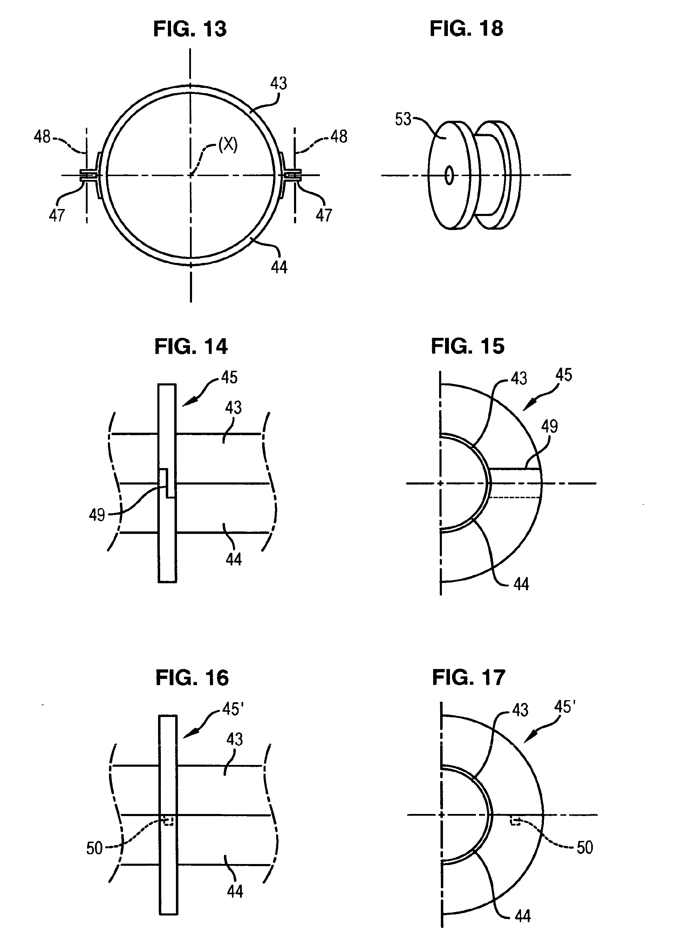

Le dispositif comprend un conduit central 42 ayant un axe central X, qui se confond localement sensiblement avec la direction de progression de la conduite pénétrant dans le dispositif. Ce conduit constitue un passage pour la conduite, entre la face avant 7av et la face arrière 7ar. Dans l'exemple illustré, le conduit a une section circulaire, sachant que d'autres formes de sections sont parfaitement envisageables sans sortir du cadre de l'invention. Le conduit est constitué de deux demi-conduits 43, 44 (figure 6) délimités par un plan de séparation médian séparant les demi-conduits dans le sens de leur longueur. Le dispositif comprend également deux roues 45, 46, inscrites dans des plans perpendiculaires à l'axe X du conduit. Chaque roue est constituée de deux demi-disques fixés rigidement aux demi-cylindres 43, 44, et délimités sensiblement par le même plan de joint que celui des demi-disques.
Une roue avant 45 est située au droit de la traverse centrale 15 et prend appui sur les galets portés par les supports correspondants 26, 29. Une roue arrière 46 est située au droit du côté transversal 14, c'est-à-dire de manière sensiblement confondue avec la face arrière 7ar du châssis 2.
Les demi-disques 45, 46 comportent des ajourages en leur centre, qui épousent la forme extérieure des demi-cylindres 43, 44. Les demi-disques 45, 46 sont fixés, par exemple soudés, sur la surface extérieure des demi-cylindres 43, 44, formant ainsi deux ensembles séparables, chacun constitué d'un demi-cylindre et de deux demi-disques. Les deux ensembles sont assemblés l'un à l'autre par différents moyens : comme représenté à la figure 13, des cornières 47 sont placées le long des bords longitudinaux d'extrémité des demi-cylindres 43, 44, et sont assemblées / fixées deux à deux par des systèmes de type vis-écrou 48. Trois systèmes vis-écrou peuvent par exemple être prévus sur chaque couple de cornière et répartis sur la longueur des cornières. Ces cornières ne sont pas nécessairement appliquées sur toute la longueur du conduit, mais peuvent par exemple être uniquement prévues dans le tronçon compris entre les roues 45, 46. En référence aux figures 6, 7 et 14, 15, les bords adjacents des demi-disques 45 peuvent comprendre des formes complémentaires telles que des marches 49, disposées tête-bêche, traversées d'une vis associée à un écrou assurant une fixation de ces bords. Dans une variante de réalisation, illustrée à la figure 16, un demi-disque 45' peut avoir un pion ou ergot 50 coopérant avec un orifice de forme creuse conjuguée, réalisée dans l'autre demi-disque. Notons que la première variante, à marches disposées têtes-bêches, permet une transition progressive du bord périphérique d'un demi-disque à l'autre, ce qui atténue les bruits de roulement au contact des galets. Dans une troisième variante de réalisation, non représentée, les marches peuvent être remplacées par des formes en pentes, également têtes-bêches, assurant également une transition douce entre les deux demi-disques.

La roue avant 45 supporte des bobines de fil 51 disposées sur sa face avant et s'étendant vers l'avant du dispositif (figures 2 et 3). Ces bobines 51 sont orientées selon des axes sensiblement parallèles à l'axe central longitudinal X du conduit 42. Dans l'exemple présenté, la roue 45 comporte six bobines 51 régulièrement réparties autour de l'axe central longitudinal X. La roue comporte des points de fixation 52 permettant d'accueillir un nombre maximal de bobines, en l'espèce six, sachant qu'en fonction du besoin, un nombre inférieur de bobines peut être monté sur la roue 45, par exemple 3 bobines, laissant vacant un point de fixation sur deux.

La roue arrière 46 comporte des évidements 53 destinés à alléger la structure. On note que des évidements peuvent également être prévus sur la roue avant 45, entre les points de fixation 52 des axes de bobines.

A l'intérieur du dispositif, les roues prennent appui sur quatre galets 53 de guidage et de soutien prévus sur le demi-châssis inférieur 10 (deux galets inférieurs par roue). Ces galets, illustrés à la figure 18, supportent le poids de l'ensemble. Des galets supérieurs, de conception similaire sont également prévus sur le demi-châssis supérieur 9 pour guider les roues en partie haute, et définir conjointement avec les galets inférieurs, des logements emprisonnant les roues dans le châssis, et n'autorisant que leur rotation autour de l'axe central longitudinal X. On note que chaque bobine représente un poids non négligeable, typiquement de plusieurs kilos, exerçant un couple significatif sur la roue avant 45, compte tenu de leur avancée en porte-à-faux vers la face avant 7av du châssis 7. Pour compenser cette contrainte et assurer un guidage en rotation optimal de l'ensemble conduit-roues, la roue arrière 46 rééquilibre l'ensemble vers l'arrière, par rapport à la roue avant 45, et contribue également au guidage en rotation de l'ensemble. Ainsi le guidage en rotation est réparti entre les deux roues, celles-ci étant à distance l'une de l'autre.

Selon un aspect de l'invention, des moyens d'entraînement motorisés sont prévus pour assurer la rotation de l'ensemble conduit-roues. Ces moyens d'entraînement comprennent un moteur 54 monté sur la structure du demi-châssis inférieur 10, via un support 55 solidairement fixé à ce demi-châssis (figures 2 et 4). Ces moyens comprennent également une couronne dentée 56 solidaire de l'ensemble conduit-roues, par exemple montée sur la roue arrière 46 via des vis de fixation (figures 10-12). Le moteur 54 entraîne via son arbre moteur 57 et un pignon denté un élément de transmission 58 tel qu'une chaîne à maillon ouvrable coopérant avec la couronne. Dans une variante de réalisation de l'invention, la couronne dentée ainsi que le pignon denté du moteur peuvent être remplacés par des poulies, tandis que la chaîne peut être remplacée par une courroie à maillon ouvrable. Dans ces exemples de réalisation, le moyen de transmission doit être souple ou semi-souple, fermé sur lui-même lors de son utilisation, de manière à entraîner un moyen tournant récepteur (couronne ou poulie) à partir d'un arbre moteur, mais ouvrable en un point donné par un maillon adapté, de manière à être facilement démontable.
Le moteur 54, la couronne 56, et l'élément de transmission 58 peuvent être agencés de différentes façons comme illustré aux figures 10 à 12, par exemple à l'avant de la roue arrière 46 (figure 10), ou à l'arrière de la roue arrière (figures 11 et 12), le moteur 54 pouvant être disposé à l'avant de la couronne (figures 10 et 12) ou à l'arrière de celle-ci (figure 11), en notant que l'arbre moteur 57 est dirigé vers l'arrière lorsque le moteur est disposé à l'avant de la couronne 58 et est dirigé vers l'avant dans le cas inverse.
Dans une variante de réalisation non représentée de l'invention, on peut également prévoir des moyens de transmission du type à engrenage(s), entre un pignon de l'arbre moteur et une couronne de réception solidaire de l'ensemble conduit-roues, le démontage pouvant être réalisé en retirant localement l'un des engrenage(s) des moyens de transmission.

En référence aux figures 2, 3, 8 et 9, le dispositif comporte également, à l'avant du conduit 42 autant de pattes de guidage 59 qu'il y a de bobines de fil 51. Ces pattes 59 sont comme les bobines 51 réparties angulairement sur la surface extérieure du conduit. Chaque patte 59 est constituée d'une équerre ayant la forme générale d'un L, dont la branche courte 60 est appliquée sur la surface extérieure du conduit 42, l'extrémité libre étant dirigée vers l'avant. Cette branche courte 60 est maintenue solidaire du conduit 42 via une vis 61 introduite par l'intérieur du conduit 42, dans deux orifices 62, 63 respectivement du conduit 42 et de la branche courte 60, l'extrémité libre de la vis recevant un écrou 64 tel qu'un écrou de type papillon. Chaque branche longue 65 du L comportant à son extrémité libre un orifice 66 de passage du fil destiné à le guider. On note que la vis 61 à une tête arrondie de manière à être le moins saillant et agressif possible vis-à-vis de l'espace intérieur du conduit 42 dans lequel transite la conduite. Des pions d'indexation 67 sont également prévus sur la branche courte, dirigés vers le conduit 42 et pénètrent dans des logements 67 correspondants du conduit, de manière à positionner correctement chaque patte de guidage 59.

Chaque patte 59 comprend une branche annexe 68, prolongeant la branche courte 60 du L du côté opposé à la branche longue 65, la branche annexe supportant un doigt tenseur 69 du fil venant de la bobine et traversant l'orifice de passage 66, le fil entourant le doigt tenseur 69 d'au moins un tour et étant renvoyé vers la conduite, dans une zone où l'enveloppe doit être maintenue par ce fil. Dans l'exemple illustré aux figures 8 et 9, la branche annexe 68 s'étend vers l'avant en formant un angle d'environ 45° avec l'axe central longitudinal X. Le doigt tenseur 69 forme un angle droit avec branche annexe 68, en s'élevant vers l'extérieur du conduit 42. Dans une variante de réalisation non représentée, le doigt tenseur peut être perpendiculaire à l'axe central longitudinal X et être monté directement sur la branche courte du L ou être remplacé par un système de type pince à linge avec réglage de la force de pinçage.

On va maintenant décrire le mode opératoire pour le montage et le démontage du dispositif selon l'invention :
Les demi parties de conduit 42 et roues 45, 46 sont assemblées comme décrit précédemment pour former un unique ensemble monobloc (figures 6 et 7). Celui-ci est ensuite mis en place sur le demi-châssis inférieur 10 (figures 3), les roues 45, 46 reposant en appui sur les quatre galets de guidage et de soutien prévus sur le demi-châssis inférieur 10. Le demi-châssis supérieur 9 est monté par-dessus le demi-châssis inférieur 10 de façon à refermer le dispositif (figure 2), avec emboitement entre les demi-châssis. Les galets 53 du demi-châssis supérieur 9 sont au besoin réglés en position de manière à présenter un jeu approprié permettant la rotation des roues 45, 46, sans débattement transversal.
Les demi-châssis 9 et 10 sont ensuite fixés l'un à l'autre par le système de verrouillage vis-écrou traversant les orifices 36 des demi-châssis (figure 5). L'élément de transmission du type chaine est ensuite monté sur la couronne et le pignon associé à l'arbre moteur.
Le démontage du dispositif s'effectue dans l'ordre inverse.

Bien entendu, l'invention n'est pas limitée aux moyens qui viennent d'être décrits et comprend tous les équivalents techniques entrant dans le cadre des revendications. Par exemple, dans un autre mode de réalisation, on peut prévoir un système d'articulation entre les deux demi-châssis, ne permettant pas de les désolidariser totalement comme décrit précédemment, mais de les ouvrir sur un côté, à la façon d'une boite dont on ouvre un couvercle articulé.

## Revendications

1. Dispositif pour protéger au moins un objet de forme générale allongée tel qu'un câble ou une conduite, ledit objet étant placé dans une enveloppe, notamment constituée d'une bande de géotextile, mise en forme de gaine autour dudit objet, le dispositif étant destiné à entourer l'enveloppe d'au moins un fil de maintien, tendu en hélice sur sa surface extérieure et s'étendant dans la direction longitudinale de l'objet, le dispositif comprenant :
- un châssis (9, 10),
- un conduit (42) traversant le châssis (9, 10) entre une face avant (7av) et une face arrière (7ar), et définissant un passage pour l'objet allongé, de manière à pouvoir être traversé par ledit objet allongé,
- au moins une roue (45, 46) montée à rotation sur le châssis (9, 10) autour d'un axe central longitudinal (X), la roue étant guidée via son bord périphérique par des moyens de roulement (53) portés par le châssis (9, 10), et étant fixée solidairement sur la périphérie du conduit (42),
- au moins une bobine de fil (51) montée à rotation sur la roue (45), autour d'un axe de rotation sensiblement parallèle à l'axe central longitudinal (X) du disque (45) et excentré par rapport à ce dernier (X),
- des moyens d'entraînement motorisés (54, 56, 57, 58) provoquant la rotation de la roue (45) et du conduit (42) autour de l'axe central longitudinal (X),
**caractérisé en ce que** le châssis (9, 10), le conduit (42) et ladite au moins une roue (45, 46) sont chacun constitués d'au moins deux parties mobiles (43, 44, 45, 46) l'une par rapport à l'autre, de manière à présenter un passage transversal à l'axe central longitudinal (X), entre les faces avant (7av) et arrière (7ar), permettant d'extraire transversalement l'objet allongé du dispositif.

2. Dispositif selon la revendication 1, **caractérisé en ce que** le châssis (42) est constitué d'un demi-châssis supérieur (9) s'emboîtant sur un demi-châssis inférieur (10).

3. Dispositif selon la revendication 1 ou 2 **caractérisé en ce que** le conduit (42) est constitué de deux demi-cylindres (43, 44) coopérant en contact l'un avec l'autre par deux paires de génératrices diamétralement opposées.

4. Dispositif selon la revendication 3, **caractérisé en ce que** ladite au moins une roue (45, 46) est constituée de deux demi-disques, respectivement solidaires des deux demi-cylindres (43, 44), chaque demi-disque étant délimité sensiblement dans le plan défini par les génératrices d'extrémité de leur demi-cylindre correspondant.

5. Dispositif selon la revendication 4, **caractérisé en ce que** les demi-cylindres (43, 44) comportent des moyens de fixation tels que des cornières (47) ou des pattes disposées au voisinage de leurs génératrices d'extrémité, et assemblées deux à deux par des systèmes vis-écrou (48), ces moyens de fixation s'étendant ou étant répartis sur au moins une partie de la longueur du conduit (42).

6. Dispositif selon la revendication 4, **caractérisé en ce que** les demi-disques sont assemblés l'un à l'autre par des bords ayant des formes complémentaires (49, 50), telles que des marches disposées tête-bêche, ou un système mâle-femelle.

7. Dispositif selon l'une quelconque des revendications 1 à 6, **caractérisé en ce qu'**il comprend une première roue (45) située sensiblement à mi-longueur du conduit (42), cette roue supportant ladite au moins une bobine (51) dont l'axe s'étend vers l'avant, et une seconde roue (46) sensiblement parallèle à la première et située à l'arrière de celle-ci (51).

8. Dispositif selon l'une quelconque des revendications 2 à 7, **caractérisé en ce que** les moyens de roulement comprennent, pour chaque roue, au moins deux galets inférieurs (53) supportant la roue (45, 46), montés à rotation sur le demi-châssis inférieur (10), et deux galets supérieur (53), de guidage, monté à rotation sur le demi-châssis supérieur (9).

9. Dispositif selon la revendication 8, **caractérisé en ce que** les galets supérieurs (53) sont montés sur le demi-châssis supérieur (9) via des moyens de réglage de la position de leur axe de rotation.

10. Dispositif selon l'une quelconque des revendications 1 à 9, **caractérisé en ce que** les moyens d'entraînement motorisés comprennent un moteur (54) pourvu d'un arbre moteur (57), des moyens récepteurs (56) solidaires du corps formé par le conduit (42) et ladite au moins une roue (46), des moyens de transmission (58) de mouvement depuis l'arbre moteur (57) vers les moyens récepteurs (56).

11. Dispositif selon la revendication 10, **caractérisé en ce que** les moyens récepteurs (56) sont constitués d'une couronne dentée, par exemple fixée sur ladite au moins une roue (56), tandis que les moyens de transmission (58) sont constitués d'une chaine ouvrable.

12. Dispositif selon la revendication 10, **caractérisé en ce que** les moyens récepteurs sont constitués d'une poulie, par exemple fixée sur ladite au moins une roue, tandis que les moyens de transmission sont constitués d'une courroie à maillons ouvrable.

13. Dispositif selon l'une quelconque des revendications 1 à 12, **caractérisé en ce que** ladite au moins une roue (45) comprend des moyens de fixation permettant d'accueillir entre une et six bobines (51), réparties angulairement autour de l'axe longitudinal (X).

14. Dispositif selon l'une quelconque des revendications 1 à 13, **caractérisé en ce qu'**à chaque bobine (51) est associée au moins une patte de guidage (59) du fil, disposée sensiblement à une extrémité avant du conduit (42), chaque patte étant constituée d'une équerre ayant la forme générale d'un L, dont la branche courte (60) est appliquée sur la surface extérieure du conduit (42), et est maintenue solidaire de celui-ci via une vis (61) introduite par l'intérieur du conduit, dans deux orifices (62, 63) respectivement du conduit (42) et de la branche courte (60), l'extrémité libre de la vis recevant un écrou tel qu'un écrou de type papillon, chaque branche longue (65) du L comportant à son extrémité libre un orifice (66) de passage du fil destiné à le guider.

15. Dispositif selon la revendication 14, **caractérisé en ce que** chaque patte comprend une branche annexe (68), prolongeant la branche courte (60) du L du côté opposé à la branche longue (65), la branche annexe (68) supportant un doigt tenseur (69) du fil venant de la bobine et traversant l'orifice de passage (66) de la branche longue (65), le fil entourant le doigt tenseur (69) d'au moins un tour et étant renvoyé vers l'objet allongé, dans une zone où l'enveloppe doit être maintenue par ce fil.

## Claims

1. A device for protecting at least one object having a generally elongated shape such as a cable or a duct, said object being placed in a casing, in particular consisting of a geotextile strip, shaped as a sheath around said object, said device being for surrounding the casing of at least one holding wire, helically tensioned on its external surface and extending in the longitudinal direction of the object, the device comprising:
- a chassis (9, 10),
- a duct (42) passing through the chassis (9, 10) between a front face (7av) and a rear face (7ar), and defining a passageway for the elongated object, such that said elongated object can pass threrethrough,
- at least one wheel (45, 46) rotatably mounted to the chassis (9, 10) about a longitudinal central axis (X), the wheel being guided via its peripheral edge by rolling means (53) carried by the chassis (9, 10) and being integrally fastened to the periphery of the duct (42),
- at least one wire coil (51) rotatably mounted to the wheel (45), about an axis of rotation substantially parallel to the longitudinal central axis (X) of the disk (45) and off centred with respect to the same (X),
- motorized driving means (54, 56, 57, 58) causing the rotation of the wheel (45) and the duct (42) about the longitudinal central axis (X),
**characterised in that** the chassis (9, 10), the duct (42) and said at least one wheel (45, 46) each consist of at least two parts (43, 44, 45, 46) being movable with respect to each other, so as to have a passageway transverse to the longitudinal central axis (X), between the front (7ar) and rear (7ar) faces, enabling the elongated object to be transversely extracted from the device.

2. The device according to claim 1, **characterised in that** the chassis (42) consists of an upper half-chassis (9) fitting on a lower half-chassis (10).

3. The device according to claim 1 or 2, **characterised in that** the duct (42) consists of two half-cylinders (43, 44) cooperating in contact with each other by two pairs of diametrically opposite generating lines.

4. The device according to claim 3, **characterised in that** said at least one wheel (45, 46) consists of two half-disks, respectively integral with both half-cylinders (43, 44), each half-disk being substantially bounded in the plane defined by the end generating lines of their corresponding half-cylinder.

5. The device according to claim 4, **characterised in that** the half-cylinders (43, 44) include fastening means such as angle irons (47) or tabs provided in the vicinity of their end generating lines, and assembled two by two by screw-nut systems (48), these fastening means extending or being distributed on at least part of the length of the duct (42).

6. The device according to claim 4, **characterised in that** the half-disks are assembled to each other by edges having complementary shapes (49, 50), such as head-to-feet arranged steps, or a male-female system.

7. The device according to any of claims 1 to 6, **characterised in that** it comprises a first wheel (45) substantially located half-length the duct (42), this wheel supporting said at least one coil (51) the axis of which extends forwards, and a second wheel (46) substantially parallel to the first one and located at the rear of the same (51).

8. The device according to any of claims 2 to 7, **characterised in that** the rolling means comprise, for each wheel, at least two lower rolls (53) supporting the wheel (45, 46), which are rotatably mounted to the lower half-chassis (10), and two upper guiding rolls (53), rotatably mounted to the upper half-chassis (9).

9. The device according to claim 8, **characterised in that** the upper rolls (53) are mounted to the upper half-chassis (9) via means for setting the position of their axis of rotation.

10. The device according to any of claims 1 to 9, **characterised in that** the motorized driving means comprise a motor (54) provided with a motor shaft (57), receiving means (56) integral with the body formed by the duct (42) and said at least one wheel (46), motion transmission means (58) from the motor shaft (57) to the receiving means (56).

11. The device according to claim 10, **characterised in that** the receiving means (56) consist of a ring gear, for example, fastened to said at least one wheel (46), whereas the transmission means (58) consist of an openable chain.

12. The device according to claim 10, **characterised in that** the receiving means consist of a pulley, for example fastened to said at least one wheel, whereas the transmission means consist of an openable link belt.

13. The device according to any of claims 1 to 12, **characterised in that** said at least one wheel (45) comprises fastening means allowing to the accommodation of between one and six coils (51), angularly distributed about the longitudinal axis (X).

14. The device according to any of claims 1 to 13, **characterised in that** to each coil (51) is associated at least one wire guiding tab (59), substantially provided at a front end of the duct (42), each tab consisting of a generally L shaped bracket, the short branch (60) of which is applied to the external surface of the duct (42), and is kept integral with the same via a screw (61) introduced through inside the duct, into two ports (62, 63) respectively of the duct (42) and the short branch (60), the free end of the screw receiving a nut such as a butterfly type nut, each long branch (65) of the L including at its free end a wire passage port (66) for guiding it.

15. The device according to claim 14, **characterised in that** each tab comprises an auxiliary branch (68), extending the short branch (60) of the L on the opposite side of the long branch (65), the auxiliary branch (68) supporting a tensioning finger (69) for the wire coming from the coil and passing through the passage port (66) of the long branch (65), the wire surrounding the tensioning finger (69) by at least one turn and being deflected to the elongated object, in an area where the casing has to be kept by this wire.

## Patentansprüche

1. Vorrichtung, um mindestens ein Objekt mit einer generell länglichen Form wie ein Kabel oder eine Leitung zu schützen, wobei das besagte Objekt in einer Hülle plaziert ist, die aus einem Geo-Textil-Band besteht und wobei die Vorrichtung dazu bestimmt ist, die Hülle mit mindestens einem Halte-Faden zu umhüllen, der auf ihrer äußeren Fläche als Spirale gespannt ist und der sich in der Längsrichtung des Objekts erstreckt, und wobei die Vorrichtung beinhaltet:
- ein Gestell (9, 10)
- eine Röhre (42), die das Gestell (9, 10) zwischen einer vorderen Seite (7av) und eine hinteren Seite (7ar) durchquert und die einen Durchgang für das längliche Objekt definiert, so dass das Gestell von dem besagten länglichen Objekt durchquert werden kann,
- mindestens ein Rad (45, 46), das auf dem Gestell (9, 10) um eine zentrale und in Längsrichtung liegende Rotationsachse (X) rotierbar montiert ist, wobei das Rad über seinen Umfangsrand durch vom Gestell (9, 10) getragenen Rollenmittel geführt wird und wobei das Rad mit dem Umfang der Röhre (42) fest verbunden ist,
- mindestens eine Faden-Spule (51), die auf dem Rad (45) um eine Rotationsachse rotierbar montiert ist, die im wesentlichen parallel zu der zentralen longitudinalen Rotationsachse (X) der Scheibe (45) und exzentrisch im Verhältnis zu dieser (X) platziert ist,
- motorisierte Antriebsmittel (54, 56, 57, 58), die die Rotation des Rades (45) und der Röhre (42) um die zentrale longitudinale Rotationsachse (X) bewirken,
**dadurch gekennzeichnet, dass** das Gestell (9, 10), die Röhre (42) und das besagte mindestens eine Rad (45, 46) je von mindestens zwei zueinander beweglichen Teilen (43, 44, 45, 46) gebildet sind, so dass ein Querdurchgang zu der zentralen longitudinalen Achse (X) bereitgestellt wird, und zwar zwischen der vorderen Seite (7av) und der hinteren Seite (7ar), so dass das längliche Objekt aus der Vorrichtung quer herausgenommen werden kann.

2. Vorrichtung nach Anspruch 1, **dadurch gekennzeichnet, dass** das Gestell (42) aus einer oberen Gestellhälfte (9) besteht, die mit einer untere Gestellhälfte (10) zusammensteckbar ist.

3. Vorrichtung nach Anspruch 1 oder 2, **dadurch gekennzeichnet, dass** die Röhre (42) von zwei Halbzylindern (43, 44) gebildet ist, die durch zwei diametral gegenüber liegende Mantellinien-Paaren in Kontakt miteinander kooperieren.

4. Vorrichtung nach Anspruch 3, **dadurch gekennzeichnet, dass** das mindestens eine Rad (45, 46) von zwei Halbscheiben (43, 44) gebildet ist, die jeweils fest mit den beiden Halbzylindern verbunden sind, wobei jede Halbscheibe im wesentlichen in der Ebene begrenzt ist, die durch die Endmantellinien der korrespondierenden Halbzylinder definiert ist.

5. Vorrichtung nach Anspruch 4, **dadurch gekennzeichnet, dass** die Halbzylinder (43, 44) Befestigungsmittel beinhalten, wie Winkeleisen (47) oder Laschen, die in der Nachbarschaft ihrer Endmantellinien angeordnet sind und die durch Schrauben-Mutter Systeme (48) zusammengefügt sind, wobei diese Befestigungsmittel sich auf mindestens einem Teil der Länge der Röhre (42) erstrecken oder verteilt sind.

6. Vorrichtung nach Anspruch 4, **dadurch gekennzeichnet, dass** die Halbscheiben miteinander über Ränder zusammengefügt sind, die zueinander komplementäre Formen haben (49, 50), wie Stufen, die entgegengesetzt angeordnet sind, oder ein männlichweiblich System.

7. Vorrichtung nach irgendeinem der Ansprüche 1 bis 6, **dadurch gekennzeichnet, dass** sie ein erstes Rad (45), das im wesentlichen auf der halben Länge der Röhre (42) angeordnet ist, wobei dieses Rad die besagte mindestens eine Spule (51) an einer sich nach vorne erstreckenden Achse trägt, und ein zweites Rad (46) aufweist, das im wesentlichen parallel zum ersten Rad ist und das hinter dieser (51) angeordnet ist.

8. Vorrichtung nach irgendeinem der Ansprüche 2 bis 7, **dadurch gekennzeichnet, dass** die Rollenmittel für jedes Rad mindestens zwei untere, das Rad (45, 46) unterstützende Walzen (53), die rotierbar auf der unteren Gestellhälfte (10) montiert sind, und zwei oberen Führungs-Walzen (53) beinhalten, die rotierbar auf der oberen Gestellhälfte (9) montiert sind.

9. Vorrichtung nach Anspruch 8, **dadurch gekennzeichnet, dass** die oberen Walzen (53) an der oberen Gestellhälfte (9) über Justierungs-Mittel für die Lage ihrer Rotationsachsen montiert sind.

10. Vorrichtung nach irgendeinem der Ansprüche 1 bis 9, **dadurch gekennzeichnet, dass** die motorisierten Antriebsmittel einen Motor (54) mit einer Antriebswelle (57), Aufnahmemittel (56), die mit dem von der Röhre (42) und dem mindestens einen Rad (46) gebildeten Körper verbunden sind, sowie Bewegungs-Übertragungsmittel (58) von der Antriebswelle (57) auf die Aufnahmemittel (56) aufweisen.

11. Vorrichtung nach Anspruch 10, **dadurch gekennzeichnet, dass** die Aufnahmemittel (56) von einem Zahnkranz gebildet sind, der beispielsweise an dem besagten mindestens einen Rad (46) befestigt ist, während die Übertragungsmittel (58) von einer öffenbaren Kette gebildet sind.

12. Vorrichtung nach Anspruch 10, **dadurch gekennzeichnet, dass** die Aufnahmemittel (56) von einer Riemenscheibe gebildet sind, die zum Beispiel an dem besagten mindestens einen Rad befestigt ist, während die Übertragungsmittel von einem öffenbaren Gliederriemen gebildet sind.

13. Vorrichtung nach irgendeinem der Ansprüche 1 bis 12, **dadurch gekennzeichnet, dass** das besagte mindestens eine Rad (45) Befestigungsmittel beinhaltet, die eine bis sechs Spulen (51) aufnehmen können, die winkelversetzt um die Longitudinalachse (X) herum angeordnet sind.

14. Vorrichtung nach irgendeinem der Ansprüche 1 bis 13, **dadurch gekennzeichnet, dass** jeder Spule (51) mindestens eine Führungslasche (59) für den Faden zugeordnet ist, die im wesentlichen auf einem vorderen Ende der Röhre (42) angeordnet ist, wobei jede Lasche aus einem Winkel mit der generellen Form eines "L" besteht, deren kurzer Schenkel (60) auf der äußeren Fläche der Röhre (42) angebracht ist und mit dieser mittels einer Schraube (61) zusammengehalten wird, die vom Inneren der Röhre durch zwei Öffnungen (62, 63) in der Röhre (42) bzw. im kurzen Schenkel (60) eingesteckt ist, wobei das freie Ende der Schraube eine Mutter aufnimmt, wie eine Flügelmutter, und wobei jeder lange Schenkel (65) des "L" eine Öffnung (66) auf seinem freien Ende für den Durchgang des Fadens beinhaltet, die für dessen Führung bestimmt ist.

15. Vorrichtung nach Anspruch 14, **dadurch gekennzeichnet, dass** jede Lasche einen zusätzlichen Schenkel (68) umfasst, der den kurzen Schenkel (60) des "L" auf der gegenüberliegenden Seite des langen Schenkels (65) verlängert, wobei der zusätzliche Schenkel (68) einen Spannfinger (69) für den aus der Spule austretenden und die Durchgangsöffnung (66) im langen Schenkel (65) durchquerenden Faden trägt, wobei der Faden den Spannfinger (69) mit mindestens einer Windung umwindet und zum länglichen Objekt umgeleitet wird, und zwar in einer Zone in der die Hülle durch diesen Faden befestigt werden soll.
